# DEMANDE DE BREVET EUROPEEN

(11) **EP 1 970 692 A1**
(43) Date de publication de la demande: **17.09.2008**
(21) Numéro de dépôt: 08305053.4
(22) Date de dépôt: 12.03.2008
(51) Int. Cl.: G01M 19/00

(54) **Installation de contrôle pour piéces équipées d'inserts de fixation par encliquetage**

(30) Priorité: 14.03.2007 FR 0701834
(71) Demandeur: Allio, 44260 Malville (FR)
(72) Inventeur: ALLIO, Gérard, 44000 NANTES (FR); HERVO, Philippe, 44220 COUERON (FR); PERRAIS, Thierry, 44600 SAINT-NAZAIRE (FR)
(74) Mandataire: Michelet, Alain

(57) **Abrégé**

L'installation conforme à l'invention, pour le contrôle de pièces (2) équipées d'inserts de fixation par encliquetage (3) comporte des blocs (4) de réception d'inserts munis chacun d'un orifice d'accueil d'inserts (8) dont certains au moins ont une bordure périphérique qui est délimitée au moins en partie par une zone de la bordure d'au moins un volet escamotable (5, 5').
Cette particularité permet de faciliter les opérations d'extraction de l'insert (3) et de limiter ses risques de dégradations.
De préférence, l'orifice (8) est délimité par deux zones de bordure complémentaires de deux volets escamotables (5, 5') montés pivotants autour d'axes de rotation (10, 10') parallèles, chacun desdits volets (5, 5') étant associé à un ressort de rappel tendant à le ramener en appui contre une structure de butée (17).

## Description

La présente invention concerne les installations permettant le contrôle de pièces qui sont équipées d'inserts de fixation par encliquetage.

Dans différentes industries, certaines pièces nécessitent d'être fixées de manière amovible sur un support, par exemple pour assurer leur remplacement en cas de dégradations ou d'usure, ou pour permettre l'accès à des zones que lesdites pièces sont justement destinées à masquer.

Les pièces correspondantes peuvent alors être équipées d'inserts de fixation par encliquetage, chacun de ces inserts étant muni, d'une part, de moyens de solidarisation avec ladite pièce associée, et d'autre part, d'une tête saillante agencée pour venir s'insérer à force au sein d'un orifice ménagé dans le support de réception.

Très généralement, le support en question a une épaisseur limitée, au moins au niveau de ses inserts de fixation, pour définir un volume d'accueil derrière la bordure périphérique de chaque orifice, et la tête d'insert est structurée de sorte à pouvoir passer au travers de son orifice de fixation par compression radiale élastique, puis de sorte à pouvoir se déployer dans le volume d'accueil précité.
Le nombre et la forme des inserts équipant chaque pièce sont adaptés en fonction du type de pièce équipée et en fonction des caractéristiques de fixation recherchées.

La désolidarisation de la pièce d'avec son support s'effectue par traction, les têtes d'inserts étant extraites (ou déclipsées) de leurs orifices d'accueil par leurs caractéristiques intrinsèques d'élasticité.

On rencontre notamment ce type de pièce munie d'inserts de fixation par encliquetage dans le domaine de l'automobile ; c'est le cas pour la majorité des garnitures intérieures des véhicules.

Mais dans le domaine concerné, les tolérances spatiales et dimensionnelles de ce genre de pièces sont relativement limitées et il est nécessaire de les contrôler, avant la livraison au constructeur, pour s'assurer de leur conformité.
Les tests ou les contrôles correspondants sont réalisés de manière aléatoire, par exemple tous les vingt exemplaires ; ils sont réalisés sur des installations de contrôle (bancs tests) adaptées à chaque type de pièce, comportant des orifices de réception d'inserts (ménagés dans des structures appelées « blocs de réception d'inserts ») organisés comme dans le support « réel » destiné à recevoir la pièce équipée.

Cependant, l'enlèvement par arrachement des pièces de telles installations de contrôle n'est pas très facile à réaliser et entraîne fréquemment la dégradation de certains des inserts de fixation. Certaines des pièces testées nécessitent alors un recyclage voire même une mise au rebut.

Pour remédier à ce problème, on a développé des blocs de réception d'inserts équipés d'organes poussoirs aptes à venir appliquer une pression d'extraction au niveau de l'extrémité des têtes d'inserts au moment de l'opération d'enlèvement de la pièce.
Mais ces installations particulières ont une structure relativement complexe et onéreuse.

Le but de la présente invention est donc de proposer une installation de contrôle pour pièces équipées d'inserts de fixation par encliquetage, qui, tout en étant de structure très simple, permet de faciliter l'enlèvement par extraction des pièces, une fois les opérations de tests achevées.

Pour cela, dans l'installation de contrôle conforme à l'invention, certains au moins des orifices de réception d'inserts (et de préférence tous) ont une bordure périphérique qui est délimitée au moins en partie par une zone de la bordure d'au moins un volet escamotable. Après positionnement correct de la pièce sur l'installation de contrôle, et mise en oeuvre des opérations de tests nécessaires, la manoeuvre d'enlèvement de la pièce par extraction des têtes d'inserts hors de leur orifice d'accueil est facilitée par le retrait au moins partiel dudit volet escamotable.

De préférence, la zone de bordure du ou des volets escamotables délimitant l'orifice est en forme d'arc de cercle.

Selon une autre particularité, le volet escamotable est maintenu en position active (c'est-à-dire une position dans laquelle ladite zone de bordure délimite une partie de l'orifice d'accueil d'inserts), par des moyens de rappel élastiques.

Dans une forme de réalisation préférée, le ou chaque volet escamotable est monté articulé autour d'un axe de rotation ; cet axe de rotation s'étend avantageusement perpendiculairement ou sensiblement perpendiculairement à l'axe de l'orifice d'accueil d'inserts.

Selon un mode de réalisation particulier, lorsqu'il est en position active, dans laquelle sa zone de bordure délimite une partie de l'orifice d'accueil d'inserts, le volet articulé vient en appui contre une structure de butée fixant cette position dans un sens de rotation, pour permettre la mise en place des inserts par encliquetage, et autorisant son mouvement d'escamotage uniquement dans l'autre sens de rotation, pour faciliter l'extraction dudit insert, les moyens de rappel élastiques tendant à ramener ledit volet en appui contre ladite structure de butée.

Selon encore une forme de réalisation préférentielle, l'orifice de chaque bloc de réception d'inserts est délimité par deux zones de bordure complémentaires de deux volets escamotables disposés en vis-à-vis, chacune desdites zones de bordure ayant une forme générale de demi-cercle.

Encore selon une forme de réalisation préférée, l'orifice de chaque bloc de réception d'inserts est délimité par deux zones de bordures complémentaires de deux volets escamotables qui sont montés pivotants autour d'axes de rotation parallèles, chacun desdits volets étant associé à un ressort de rappel tendant à le ramener en appui contre la structure de butée.

Toujours selon un mode de réalisation particulièrement intéressant, l'installation comporte des blocs de réception d'inserts dont certains au moins sont constitués d'une embase portant deux volets escamotables dont les bordures en vis-à-vis comportent une zone en demi-cercle pour former ensemble l'orifice d'accueil d'inserts et dont la bordure opposée est montée pivotante sur ladite embase ; laquelle embase est munie
- de moyens de fixation sur un support, - de la structure de butée pour lesdits volets escamotables, et - de flasques latéraux formant chape pour les axes d'articulation desdits volets escamotables ; en outre, des moyens de rappel élastiques, par exemple en forme de ressort spirale muni de languettes d'appui, sont interposés entre ladite embase et chacun desdits volets escamotables pour tendre à ramener ces derniers en appui contre ladite structure de butée.

L'invention sera encore illustrée, sans être aucunement limitée, par la description suivante, en association avec les dessins annexés dans lesquels :
- la figure 1 est une vue en perspective d'une installation de contrôle conforme à l'invention, prête à recevoir une pièce à tester équipée d'inserts de fixation par encliquetage ;
- la figure 2 est une vue en perspective de l'un des blocs de réception d'inserts qui équipent l'installation de la figure 1 ;
- la figure 3 est une vue de dessus du bloc de réception d'inserts illustré sur la figure 2;
- la figure 4 est une vue en coupe selon 4-4 de la figure 3 ;
- la figure 5 est une vue d'extrémité du bloc de réception d'inserts illustré sur les figures 2 à 4 ;
- les figures 6, 7, 8 et 9 sont des représentations schématiques qui illustrent en quatre étapes la fixation d'un insert sur son bloc récepteur (figures 6, 7 et 8) et son extraction (figure 9).

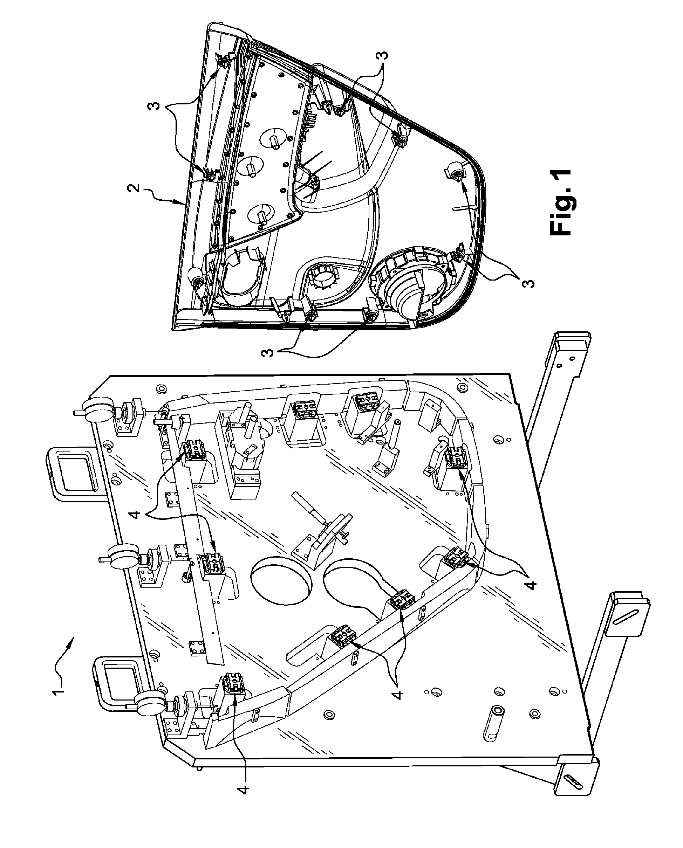

La figure 1 montre une installation 1 qui permet le contrôle visuel et mesuré de pièces 2 équipées d'inserts 3 de fixation par encliquetage, en l'occurrence des garnitures internes de portières d'automobiles.

La configuration générale de l'installation 1 et ses moyens de contrôle sont classiques; ils sont adaptés à la structure et à la nature de la pièce 2 à tester. La particularité de cette installation réside dans la structure des blocs 4 destinés à recevoir les inserts 3, pour la fixation convenable de chaque pièce 2.

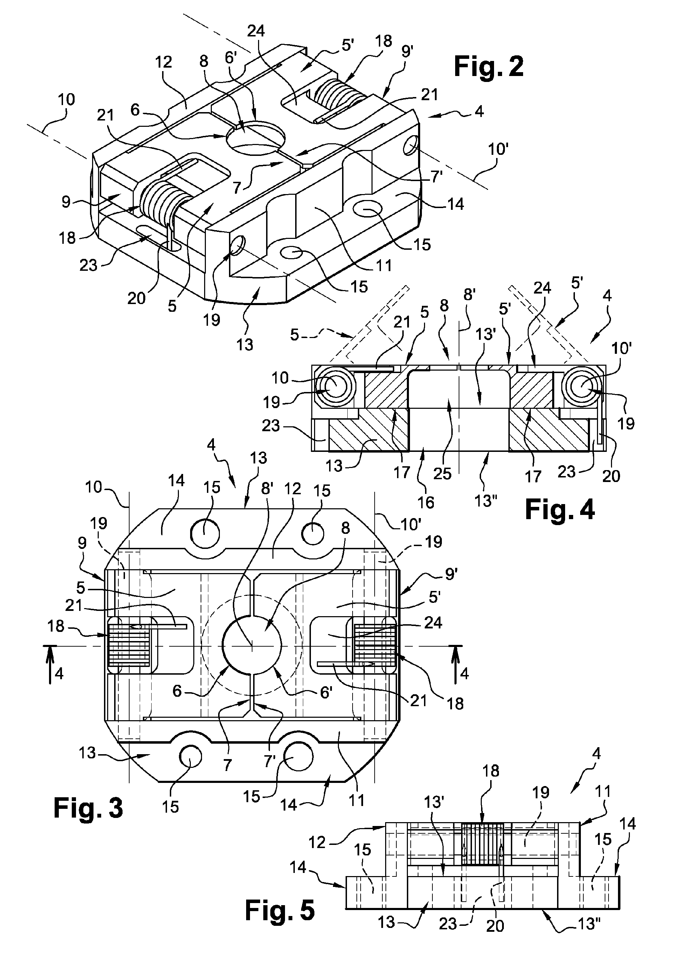

Les blocs d'inserts 4 en question sont détaillés sur les figures 2 à 5.

Sur ces figures 2 à 5, on peut voir que chaque bloc d'insert 4 est constitué de deux volets en vis-à-vis 5 et 5', ayant une forme générale rectangulaire, dont une zone 6, 6' de la bordure d'extrémité 7, 7' est en forme d'arc de cercle, et plus particulièrement en forme de demi-cercle, pour définir ensemble un orifice 8, d'axe 8', destiné à constituer l'orifice de fixation d'un insert 3.

Les deux extrémités 9, 9' éloignées l'une de l'autre des volets 5 et 5' sont articulées chacune autour de leur propre axe 10, 10' sur des flasques latéraux 11 et 12 d'une embase 13.

Cette embase 13 comporte une face supérieure 13' à partir de laquelle s'étendent les deux flasques latéraux 11, 12, et une face inférieure 13" ; elle comporte deux ailes latérales 14 munies d'orifices traversants 15 qui permettent sa fixation adéquate sur le châssis de l'installation 1 au moyen de vis (non représentées).
L'embase 13 comporte encore une ouverture centrale 16, en regard de l'orifice 8 délimité par les zones de bordure 6, 6' des deux volets 5 et 5' ; et aussi une structure de butée 17, constituée en fait par une partie de sa surface supérieure 13' qui est située entre les deux flasques latéraux 11 et 12, destinée, comme expliqué plus loin, à coopérer avec les deux volets pivotants 5 et 5'.

Des moyens de rappel élastiques 18 sont interposés entre l'embase 13 et chacun des volets 5, 5' pour tendre à ramener ces derniers en position dite « active » (telle qu'illustrée en traits pleins sur les figures 2 à 5), c'est-à-dire en appui contre la structure de butée 17 précitée (constituée par la face supérieure 13' de l'embase 13). Dans cette position « active » les faces supérieures planes des deux volets 5 et 5' sont situées dans le même plan et leur zone de bordure d'extrémité délimite convenablement l'orifice central 8.
A partir de cette position « active » on comprend bien que la structure de butée 17 empêche le pivotement des deux volets 5 et 5' dans l'une des directions de rotation. En revanche, leur pivotement dans l'autre direction est possible, comme illustré en pointillés sur la figure 4, pour obtenir une position « inactive » dans laquelle les contours de l'orifice 8 ne sont plus définis (ou pratiquement plus définis selon l'angle de pivotement appliqué).

Pour passer de la position « active » à la position « inactive », les bordures d'extrémités 7 et 7' des volets 5 et 5' s'éloignent de l'embase 13 (et la partie inférieure des deux volets s'éloigne de la structure de butée 17).

Dans le mode de réalisation des figures 2 à 5, les moyens de rappel élastiques sont constitués par un ressort spirale 18 monté sur un axe cylindrique 19 matérialisant chaque axe de pivotement 10 et 10', et qui se prolonge par des languettes d'extrémités 20 et 21 venant en appui respectivement contre l'embase 13 et contre le volet 5 ou 5' associé. En l'occurrence, la languette d'extrémité 20 vient s'insérer dans un logement 23 ménagé en regard dans l'embase 13. De son côté, la languette d'extrémité 21 vient en appui sur le dessus du volet 5, 5' associé ; elle vient en particulier se loger dans une réservation 24 qui permet d'éviter sa saillie au-delà du plan de la face supérieure du volet 5, 5' associé.

Les axes 19 qui matérialisent les articulations 10 et 10' traversent la largeur des volets 5 et 5' et leurs extrémités viennent se loger dans des orifices circulaires ménagés dans les deux flasques 11, 12 en regard, formant alors des sortes de chapes.

Les deux articulations 10 et 10' sont parallèles entre elles et elles s'étendent perpendiculairement à l'axe 8' de l'orifice 8.

Sur la figure 4, on remarque que les deux volets 5 et 5' ont une épaisseur relativement importante du côté de leur axe 10, 10', pour permettre leur articulation par les axes cylindriques 19 ; en revanche, cette épaisseur est plus limitée au niveau de leur bordure d'extrémité définissant l'orifice 8, pour permettre la réception efficace d'un insert 3.
Ainsi, les deux volets 5 et 5' présentent une face supérieure plane ou sensiblement plane, située du côté opposé à l'embase 13 et une face inférieure (du côté de l'embase 13) en forme générale de baïonnette. La face inférieure de leur zone épaisse correspond à la partie des volets 5, 5' coopérant avec la structure de butée 17 de l'embase 13. En outre, l'espace 25 situé sous les extrémités centrales des deux volets 5 et 5' lorsqu'ils sont en position « active » vient dans le prolongement de l'orifice 16 ménagé dans l'embase 13, pour former un logement destiné à recevoir une partie des inserts de fixation 3.

Les blocs 4 ainsi structurés sont fixés au sein de l'installation 1, ceci en fonction du positionnement des inserts 3 sur la pièce 2 à réceptionner. Cette fixation est réalisée au moyen de vis, après plaquage de la face inférieure 13" de l'embase 13 contre une surface support en regard de l'installation. Les deux volets 5 et 5' de chaque bloc 4 sont alors placés en position active, délimitant ensemble l'un des orifices de fixation 8.

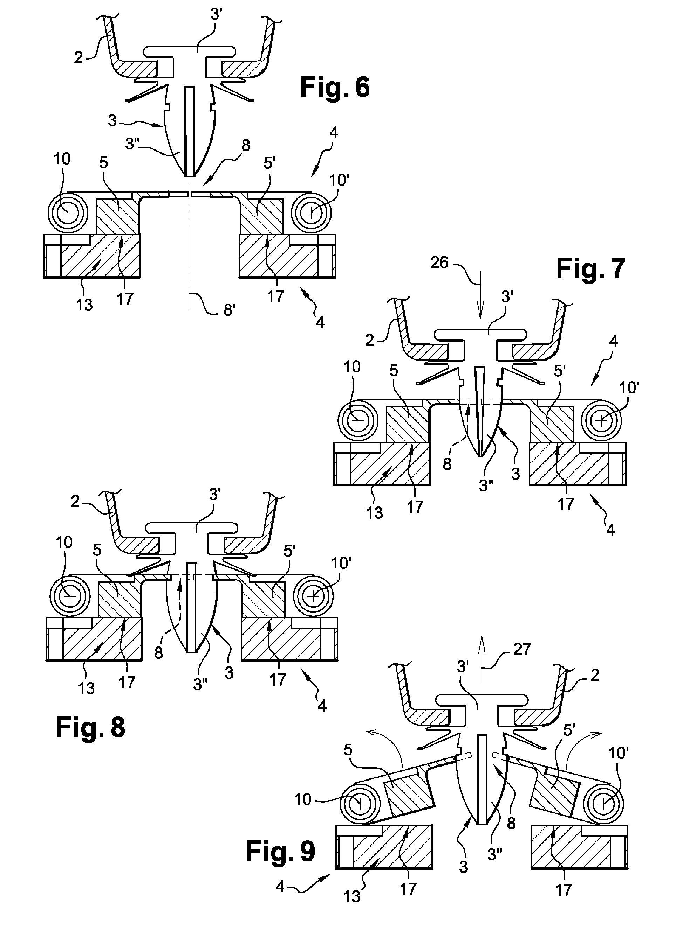

Les figures 6 à 9 illustrent de manière schématique les opérations de positionnement et d'extraction d'une pièce 2 équipée d'inserts 3, sur l'installation de contrôle 1, respectivement avant et après les opérations de contrôle/test qu'elle est destinée à subir.

La pièce 2 est présentée en regard de l'installation de contrôle 1 de la même manière qu'elle le serait par rapport au support « réel » destiné à la recevoir.

Chaque insert 3 vient alors se positionner en regard de l'orifice 8 d'un bloc 4, tel qu'illustré sur la figure 6, son corps 3' étant solidarisé avec la pièce 2 et sa tête « élastique » de fixation 3" s'étendant en saillie en direction du bloc récepteur 4.

L'introduction des inserts 3 au sein de leur orifice d'accueil 8 s'effectue par poussée (l'effort appliqué étant illustré par la flèche repérée 26, figure 7). Les dimensions de l'orifice 8 sont adaptées à celles de la tête saillante d'insert 3" pour assurer la pénétration de cette dernière à force, par déformation élastique.
Ce positionnement à force s'effectue comme s'il s'agissait d'une pose de la pièce 2 sur son support « réel ». Les deux volets 5 et 5' dont les bordures d'extrémités délimitent l'orifice 8 sont immobilisés dans ce sens de l'application d'effort par la structure de butée 17.

La pièce 2 est convenablement positionnée sur l'installation lorsque les têtes saillantes d'inserts 3" sont encliquetées ou verrouillées sur l'orifice de réception 8 (figure 8). La majeure partie de chaque tête saillante 3" s'étend alors dans le logement central 16, 25 du bloc 4, formant volume d'accueil.
Les opérations de test et de contrôle sur la pièce 2 peuvent être menées de manière classique.

Une fois ces opérations de contrôle finalisées, la pièce 2 est enlevée de l'installation par simple extraction, tel qu'illustré sur la figure 9. L'effort d'extraction appliqué est illustré par la flèche de repérage 27.
Dans le cadre de cette manoeuvre, les inserts 3 bloqués dans leur orifice 8, entraînent avec eux les deux volets 5 et 5' qui pivotent légèrement autour de leurs axes respectifs 10 et 10'. Les deux zones de bordure 6 et 6' qui délimitent l'orifice 8 s'éloignent alors progressivement l'une de l'autre. L'orifice 8 s'agrandit petit à petit pour conférer aux volets 5, 5' une position de plus en plus inactive, facilitant ainsi l'extraction de l'insert 3. Cette extraction est effective lorsque la déformation de l'orifice 8 atteint un seuil correspondant aux caractéristiques d'encombrement au repos de la partie saillante d'insert 3", tenant compte aussi de ses caractéristiques d'élasticité radiale et des efforts d'appui appliqués par les deux volets 5, 5' soumis à leurs moyens de rappel élastiques 18.

Une fois chaque insert 3 extrait, les volets 5, 5' reprennent leur position active, justement sous l'effet de leurs moyens de rappel élastiques 18. L'installation est prête à recevoir une nouvelle pièce à contrôler.

La force des moyens de rappel élastiques est adaptée selon les caractéristiques de verrouillage et de résistance à l'arrachement recherchées pour la pièce 2.

On comprend bien qu'une telle structure de bloc récepteur 4 permet de moins solliciter à l'effort les inserts 3 lors des opérations d'extraction hors de leur orifice d'accueil, ce qui permet de faciliter ces opérations et de limiter sensiblement les problèmes de dégradations desdits inserts.

Dans des variantes de réalisation, le nombre, la forme et la structure des volets escamotables pourront être différents de ceux décrits ci-dessus.

## Revendications

1. Installation de contrôle pour pièces (2) équipées d'inserts (3) de fixation par encliquetage, laquelle installation (1) comporte des blocs (4) de réception desdits inserts (3), munis chacun d'un orifice de réception d'inserts (8), **caractérisée en ce que** au moins certains desdits orifices (8) de réception d'inserts ont une bordure périphérique qui est délimitée au moins en partie par une zone (6, 6') de la bordure (7, 7') d'au moins un volet escamotable (5, 5').

2. Installation selon la revendication 1, **caractérisée en ce que** la zone de bordure (6, 6') du ou des volets escamotables (5, 5') délimitant l'orifice (8) est en forme d'arc de cercle.

3. Installation selon l'une quelconque des revendications 1 ou 2, **caractérisée en ce que** le volet escamotable (5, 5') est maintenu en position active dans laquelle lesdites zones de bordure (6, 6') délimitent une partie de l'orifice (8) d'accueil d'inserts, par des moyens de rappel élastiques (18).

4. Installation selon la revendication 3, **caractérisée en ce que** le ou chaque volet escamotable (5, 5') est monté articulé autour d'un axe de rotation (10, 10').

5. Installation selon la revendication 4, **caractérisée en ce que** ledit axe de rotation (10, 10') s'étend perpendiculairement ou sensiblement perpendiculairement à l'axe (8') de l'orifice (8) d'accueil d'inserts.

6. Installation selon l'une quelconque des revendications 3 à 5, **caractérisée en ce que**, lorsqu'il est en position active dans laquelle sa zone de bordure (6, 6') délimite une partie de l'orifice (8) d'accueil d'inserts, le volet articulé (5, 5') vient en appui contre une structure de butée (17) fixant cette position dans un sens de rotation, pour permettre l'encliquetage d'un insert (3), et autorisant son mouvement d'escamotage uniquement dans l'autre sens de rotation, pour faciliter l'extraction dudit insert (3), les moyens de rappel élastiques (18) tendant à ramener ledit volet (5, 5') en appui contre ledit système de butée (17).

7. Installation selon l'une quelconque des revendications 1 à 6, **caractérisée en ce que** l'orifice (8) de chaque bloc de réception d'insert (4) est délimité par deux zones de bordure complémentaires (6, 6') de deux volets escamotables (5, 5') disposés en vis-à-vis, chacune desdites zones de bordure (6, 6') ayant une forme générale de demi-cercle.

8. Installation selon les revendications 6 et 7 combinées, **caractérisée en ce que** l'orifice (8) de chaque bloc (4) de réception d'insert est délimité par deux zones de bordure complémentaires (6, 6') de deux volets escamotables (5, 5') qui sont montés pivotants autour d'axes de rotation (10, 10') parallèles, chacun desdits volets (5, 5') étant associé à un ressort de rappel (18) tendant à le ramener en appui contre la structure de butée (17).

9. Installation selon la revendication 8, **caractérisée en ce qu'**elle comporte des blocs de réception d'inserts (4) dont certains au moins sont constitués d'une embase (13) portant deux volets (5, 5') escamotables, dont les bordures (7, 7') en vis-à-vis comportent une zone en demi-cercle (6, 6') pour former ensemble l'orifice d'accueil d'inserts (8) et dont la bordure opposée (9, 9') est montée pivotante sur ladite embase (13) par l'intermédiaire d'axes (10, 10'), laquelle embase (13) est munie - de moyens de fixation (15) sur un support, - de la structure de butée (17) pour lesdits volets escamotables (5, 5') et - de flasques latéraux (11, 12) recevant des axes cylindriques (19) d'articulation desdits volets escamotables (5, 5'), des moyens de rappel élastiques, par exemple en forme de ressort spirale (18) muni de languettes d'appui (20, 21), étant interposés entre ladite embase (13) et chacun desdits volets (5, 5') pour tendre à ramener ces derniers en appui contre ladite structure de butée (17).

10. Bloc de réception d'insert, pour une installation selon l'une quelconque des revendications 1 à 9, lequel bloc (4) est constitué d'une embase (13) portant deux volets escamotables (5, 5') dont les bordures (7, 7') en vis-à-vis comportent une zone (6, 6') en demi-cercle pour former ensemble l'orifice d'accueil d'inserts (8) et dont la bordure opposée (9, 9') est montée pivotante sur ladite embase (13) par l'intermédiaire d'axes (10, 10'), laquelle embase (13) est munie - de moyens (15) de fixation sur un support, - d'une structure de butée (17) pour lesdits volets escamotables (5, 5'), et - de flasques latéraux (11, 12) recevant des axes cylindriques (19) d'articulation desdits volets escamotables (5, 5'), des moyens de rappel élastiques, par exemple en forme de ressort spirale (18) muni de languettes d'appui (20, 21), étant interposés entre ladite embase (13) et chacun desdits volets (5, 5') pour tendre à ramener ces derniers en appui contre ladite structure de butée (17).
